# EUROPÄISCHE PATENTSCHRIFT

(11) **EP 0 631 335 B1**
(45) Veröffentlichungstag und Bekanntmachung des Hinweises auf die Patenterteilung: **04.09.1996**
(21) Anmeldenummer: 94201276.6
(22) Anmeldetag: 06.05.1994
(51) Int. Cl.: H01M 2/06

(54) **Poldurchführung für Akkumulatoren**
Feedthrough for a terminal of accumulators
Traversée de borne pour accumulateurs

(30) Priorität: 16.06.1993 DE 4319923
(43) Veröffentlichungstag der Anmeldung: 28.12.1994
(73) Patentinhaber: DETA-Akkumulatorenwerk GmbH, D-37431 Bad Lauterberg im Harz (DE)
(72) Erfinder:
(74) Vertreter: Ackmann, Günther

(56) Entgegenhaltungen:
- EP-A- 0 297 376
- EP-A- 0 399 247
- DE-B- 1 016 333
- DE-C- 4 210 431
- US-A- 3 652 340

## Beschreibung

Die Erfindung betrifft eine Poldurchführung für Akkumulatoren, insbesondere Bleiakkumulatoren, bei der zwischen einem Polbolzen und einem nach innen ragenden Kragen einer Deckelöffnung ein hülsenförmiges Dichtungselement angeordnet ist, das mit gegen den Polbolzen anliegenden Rippen versehen ist und am oberen Ende einen nach innen gerichteten Dichtungsring bildet, der zwischen einer Schulter des Polbolzens und einem Zellverbinder von einer Polschraube eingespannt ist.

Die Poldurchführung bei Akkumulatoren soll einerseits so dicht sein, daß auch ein kriechender Elektrolytaustritt verhindert wird, andererseits eine Axialbewegung möglich ist, um eine Zerstörung des Gehäusedeckels infolge eines beim Akkumulatorenbetrieb eventuell auftretenden Wachsens der positiven Elektrodenplatten auszuschließen. Hierfür sind zahlreiche Ausführungen bekannt, denen allesamt der Nachteil eines umständlichen und in der Montage kostspieligen Aufbaus anhaftet. Bei der aus der EP 0 310 946 A1 bekannten Ausführung ist am Rand der Deckelöffnung ein nach innen weisender balgartiger Kragen angeformt, der am unteren Ende eine ringförmige Schulter aufweist, die von einer auf den Polbolzen aufschraubbaren Gewindehülse gegen eine eingearbeitete Anschlagschulter des Polbolzens gepreßt wird. Auch der Polbolzen nach der DE-PS 2833416 bedarf am Kopfende einer besonderen rippenförmigen Ausgestaltung, um eine dichte Verbindung mit einem umspritzten Dichtungselement zu erhalten, das mit dem Deckel verschweißt wird. Eine ähnliche Ausbildung zeigt auch das DE-GM 8 133 246, bei der auf dem Polbolzen eine mit Außenrippen versehene Bleibuchse angebracht ist, die von einer mit dem Deckel verschweißten Kunststoffhülse umschlossen ist.

Anderseit ist aus der EP 0 319 741 eine dem Oberbegriff des Anspruchs 1 entsprechende Poldurchführung bekannt, die jedoch keine Axialbewegung des Polbolzens zuläßt. Bei dieser Ausführung ist ein separates Dichtungselement vorgesehen, das am unteren Rand zwischen einer Polbolzenschulter und dem an den Deckel angeformten Kragen eingespannt ist, so daß eine Axialbewegung des Polbolzens unmittelbar auf den Deckel einwirkt und diesen zerstören kann.

Aufgabe der Erfindung ist die Entwicklung einer Polbolzendurchführung, die bei einem vereinfachten und preiswerten Aufbau eines Dichtungselementes eine Axialbewegung des Polbolzens gestattet.

Die Lösung besteht darin, daß das Dichtungselemnt zwischen dem mit Rippen versehenen Teil und dem oberen Dichtungsring einen balgartigen Abschnitt aufweist und der Polbolzen eine seine Axialbewegung im Dichtungselement gestattende Stabform hat.

Diese Ausführung hat zunächst den Vorteil, daß eine besondere Ausgestaltung des Polbolzenkopfes nicht erforderlich ist, sondern der Polbolzen eine einfache Zylinderstabform hat. Das separate Dichtungselement trägt zunächst zu einer bestmöglichen Abdichtung bei, wobei relativ große Dichtungsflächen vorgesehen sind, die auch einen kriechenden Elektrolytaustritt verhindern. Integrierter Bestandteil des Dichtungselements ist dabei der balgartige Abschnitt, durch den eine Axialbewegung des Polbolzens unter Aufrechterhaltung der Abdichtung möglich ist.

Vorzugsweise ist der lichte Querschnitt der Rippen kleiner als der Außendurchmesser des Polbolzens, so daß eine dichte Anlage der Rippen sichergestellt ist. Um das Kriechen des Elektrolyten entlang der Grenzflächen noch stärker zu unterbinden, können die zwischen den Rippen gebildeten Hohlräume mit einem elektrolytbeständigen und plastischen Stoff gefüllt sein. Eine weitere Ausgestaltung sieht vor, daß das Dichtungselement am unteren Ende mit einer den Rand des Kragens unterfassenden Ringschulter versehen ist. Hierdurch wird ein besonders fester und genauer Sitz des Dichtungselements im Kragen des Deckels sichergestellt, ohne daß die Ringschulter in einer die Axialbewegung hindernden Weise zwischen dem Kragen und Polbolzen verspannt ist, wie es die EP 0 319 741 Al vorsieht. Wenngleich das Dichtungselement, welches zweckmäßig aus einem elektrolytbeständigen, dauerelastischen Werkstoff, insbesondere Kunststoff, besteht, als Einzelteil preiswert herstellbar ist und in die Öffnung des Deckels eingesteckt werden kann, besteht auch die Möglichkeit, das Dichtungselement in den Kragen des Deckels einzuspritzen.

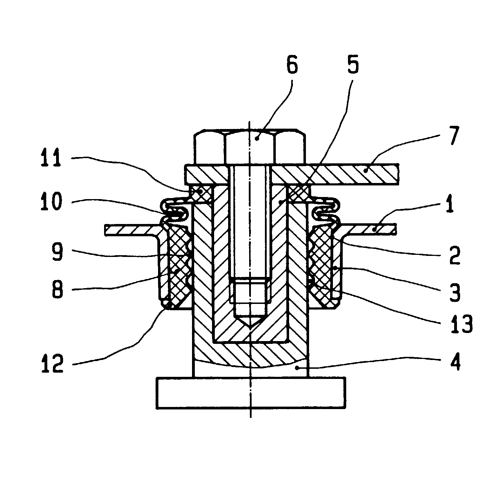

In der Zeichnung ist ein Ausführungsbeispiel der Erfindung in einem Schnitt durch eine Poldurchführung gezeigt. Der Deckel 1 des Akkumulators ist mit einer Deckelöffnung 2 für die Poldurchführung versehen. Am Rand der Deckelöffnung 2 ist ein nach innen gerichteter Kragen 3 angeformt. Der Polbolzen 4 hat eine einfache zylinderartige Stabform, wobei in bekannter Weise eine obere axiale Bohrung zum Einsetzen einer Einlegmutter 5 vorgesehen ist, in welche unter Zwischenlage eines Zellverbinders 7 eine Polschraube 6 eingeschraubt ist.

Erfindungsgemäß ist ein Dichtungselement 8 vorgesehen, das aus mehreren Abschnitten besteht. Ein zwischen dem Kragen 3 und dem Polbolzen 4 liegender Abschnitt ist mit dicht gegen den Polbolzen 4 anliegenden Rippen 9 versehen. Dabei ist der lichte Querschnitt der Rippen 9 kleiner als der Außendurchmesser des Polbolzens 4, so daß die Rippen im eingebauten Zustand fest gegen den Polbolzen 4 gepreßt werden. Dieser mit Rippen 9 versehene Teil des Dichtungselements 8 erstreckt sich über die gesamte Länge des Kragens 3. Über der Deckelöffnung 2 ist das Dichtungselement 8 mit einem balgartigen Abschnitt 10 und einem nach innen weisenden Dichtungsring 11 versehen. Außerdem besitzt das Dichtungselement 8 an seinem unteren Ende eine nach außen gerichtete Ringschulter 12, die unter den Kragen 3 greift. Das Dichtungselement 8 wird aus einem geeigneten elektrolytbeständigen, dauerelastischen Werkstoff, insbesondere Kunststoff, durch Spritzgießen od. dgl. hergestellt.

Bei der Montage wird das Dichtungselement 8 zunächst in die Deckelöffnung 2 und den Kragen 3 eingedrückt, wobei die Ringschulter 12 gegen den unteren Rand des Kragens 3 zur Anlage kommt. Sodann wird der Deckel 1 mit dem eingesteckten Dichtungselement auf den Polbolzen 4 gesteckt. Dabei kommt der Dichtungsring 11 gegen die obere Dichtungsfläche des Polbolzens 4 zur Anlage, wobei das obere Ende der Einlagemutter umfaßt wird. Anschließend wird der Zellverbinder 7 aufgesteckt und die Polschraube 6 in die Einlegmutter 5 eingeschraubt. Dabei wird der Dichtungsring 11 zwischen der oberen Anschlagschulter des Polbolzens 4 und dem Zellverbinder 7 abdichtend verspannt.

## Patentansprüche

1. Poldurchführung für Akkumulatoren, insbesondere Bleiakkumulatoren, bei der zwischen einem Polbolzen und einem nach innen ragenden Kragen einer Deckelöffnung ein hülsenförmiges Dichtungselement angeordnet ist, das mit gegen den Polbolzen anliegenden Rippen versehen ist und am oberen Ende eine nach innen gerichteten Dichtungsring bildet, der zwischen einer Schulter des Polbolzens und einem Zellverbinder von einer Polschraube eingespannt ist, dadurch gekennzeichnet, daß das Dichtungselement (8) zwischen dem mit Rippen (9) versehenen Teil und dem oberen Dichtungsring (11) einen balgartigen Abschnitt (10) aufweist und der Polbolzen (4) eine seine Axialbewegung im Dichtungselement (8) gestattende Stabform hat.

2. Poldurchführung nach Anspruch 1, dadurch gekennzeichnet, daß der lichte Querschnitt der Rippen (9) kleiner ist als der Außendurchmesser des Polbolzens (4).

3. Poldurchführung nach Anspruch 1 oder 2, dadurch gekennzeichnet, daß die zwischen den Rippen (9) gebildeten Hohlräume (13) mit einem elektrolytbeständigen und plastischen Stoff gefüllt sind.

4. Poldurchführung nach einem der Ansprüche 1 bis 3, dadurch gekennzeichnet, daß das Dichtungselement (8) am unteren Ende mit einer den Rand des Kragens (3) unterfassenden Ringschulter (12) versehen ist.

5. Poldurchführung nach einem der Ansprüche 1 bis 4, dadurch gekennzeichnet, daß das Dichtungselement (8) in den Kragen (3) des Deckels (1) eingespritzt ist.

6. Poldurchführung nach einem der Ansprüche 1 bis 5, dadurch gekennzeichnet, daß das Dichtungselement (8) aus einem elektrolytbeständigen, dauerelastischen Werkstoff besteht.

## Claims

1. A terminal bushing for accumulators, more particularly lead-acid accumulators, wherein a sleeve-like sealing element is disposed between a post and an inwardly extending collar of an aperture in the casing, the sealing element having ribs engaging the post and forming at its top end an inwardly directed ring seal clamped between a shoulder of the post and a cell connector by a terminal screw, characterised in that the sealing element (8) has a bellows-like part (10) between the ribbed (9) part and the top ring seal (11) and the post (4) has a rod shape such that it can move axially in the sealing element (8).

2. A terminal bushing according to claim 1, characterised in that the internal cross-section of the ribs (9) is less than the external diameter of the post (4).

3. A terminal bushing according to claim 1 or 2, characterised in that the voids (13) between the ribs (9) are filled with an electrolyte-resistant and plastic substance.

4. A terminal bushing according to any of claims 1 to 3, characterised in that the sealing element (8) has at its bottom end an annular shoulder (12) which engages below the edge of the collar (3).

5. A terminal bushing according to any of claims 1 to 4, characterised in that the sealing element (8) is injected into the collar (3) of the casing (1).

6. A terminal bushing according to any of claims 1 to 5, characterised in that the sealing element (8) is made of an electrolyte-resistant permanently resilient material.

## Revendications

1. Traversée de borne pour accumulateurs, notamment pour des accumulateurs au plomb, dans laquelle il est monté entre un axe de borne et un collet rentrant vers l'intérieur d'une ouverture de couvercle un élément d'étanchéité en forme de manchon qui est muni de nervures s'appliquant à l'axe de borne et qui forme à l'extrémité supérieure un joint d'étanchéité tourné vers l'intérieur, lequel est tendu entre un épaulement de l'axe de borne et un pont polaire d'une vis de borne, caractérisée en ce que l'élément (8) d'étanchéité comporte entre la pièce munie de nervures (9) et le joint (11) d'étanchéité supérieur une partie (10) en forme de soufflet et par le fait que l'axe (4) de borne a une forme en barreau qui autorise son mouvement axial dans l'élément (8) d'étanchéité.

2. Traversée de borne suivant la revendication 1, caractérisée en ce que la largeur intérieure des nervures (9) est inférieure au diamètre extérieur de l'axe (4) de borne.

3. Traversée de borne suivant la revendication 1 ou 2, caractérisée en ce que les creux (13) formés entre les nervures (9) sont remplis d'une substance plastique et résistant aux électrolytes.

4. Traversée de borne suivant l'une des revendications 1 à 3, caractérisée en ce que l'élément (8) d'étanchéité est muni à l'extrémité inférieure d'un épaulement (12) annulaire s'accrochant sous le bord du collet (3).

5. Traversée de borne suivant l'une des revendication 1 à 4, caractérisée en ce que l'élément (8) d'étanchéité est injecté dans le collet (3) du couvercle (1).

6. Traversée de borne suivant l'une des revendication 1 à 5, caractérisée en ce que l'élément (8) d'étanchéité est en une matière résistant aux électrolytes à élasticité permanente.
